# EUROPEAN PATENT APPLICATION

(11) **EP 4 660 871 A1**
(43) Date of publication of application: **10.12.2025**
(21) Application number: 24770737.5
(22) Date of filing: 07.03.2024
(51) Int. Cl.: G06F 30/367, H02M 7/48

(54) **DESIGN ASSISTANCE DEVICE, DESIGN ASSISTANCE METHOD, AND DESIGN ASSISTANCE PROGRAM**

(30) Priority: 15.03.2023 JP 2023040814
(71) Applicant: OMRON Corporation, Kyoto 600-8530 (JP)
(72) Inventor: HAMANA, Kentaro, Kyoto-shi, Kyoto 600-8530 (JP); TOKUSAKI, Hiroyuki, Kyoto-shi, Kyoto 600-8530 (JP); CHEN, Chen, Kyoto-shi, Kyoto 600-8530 (JP)
(74) Representative: Isarpatent
(86) International application number: PCT/JP2024/008903
(87) International publication number: WO 2024/190631

(57) **Abstract**

A design assistance device for assisting design of a DC power supply system including a first system including a plurality of servo devices each including an inverter circuit and an electric motor; a power supply path configured to supply DC power from a DC power supply to the plurality of servo devices; a second system to which the DC power is supplied; and an inductor connected to the power supply path acquires configuration information including connection configuration information of the power supply path and the plurality of servo devices, information regarding the number of axes of the servo device, wiring information connecting the DC power supply, the plurality of servo devices, and the second system, and characteristic information of the servo devices, and outputs an inductance value of the inductor, based on the configuration information, the inductance value suppressing a fluctuation in a current flowing through the second system.

## Description

### TECHNICAL FIELD

The present invention relates to a design assistance device, a design assistance method, and a design assistance program for assisting design of a DC power supply system.

### BACKGROUND ART

The following system is known as a power supply system in which power is supplied from one power supply to a plurality of load devices.
- A system (daisy-chain connection system) in which a plurality of load devices are daisy-chained by a power cable, and one of the plurality of load devices and a power supply are connected by a power cable.
- A system (tree connection system) in which a power supply and a plurality of load devices are connected by a power supply path formed by combining a plurality of power cables so as to branch from the power supply side.

Patent Literature 1 discloses a technique of providing a low pass filter (LPF) in each DC device in a DC power supply system that supplies DC power from one DC power supply to a plurality of DC devices, because, when power supply to the DC devices is turned on and off, a transient voltage such as an oscillation voltage or a surge voltage is generated in an applied voltage in a transient state due to a sudden change in an applied voltage to the DC devices, and thus the transient voltage is superimposed on a DC supply line that supplies DC power from the DC power supply to the plurality of DC devices, a voltage fluctuation occurs, and there is a possibility that a malfunction or the like of another DC device connected to the DC supply line occurs.

However, there has been a problem in that, when the LPF is provided in each of the DC devices connected to the DC power supply system in this manner, the DC device is increased in size.

### CITATION LIST

### PATENT LITERATURE

Patent Literature 1: JP 2009-159654 A

### SUMMARY OF INVENTION

### TECHNICAL PROBLEM

The present invention has been made in view of the above problems, and, in a DC power supply system that supplies DC power from a DC power supply to a plurality of servo devices each including an inverter circuit and an electric motor and another system via a power supply path, an object of the present invention is to provide a technique that enables design of a DC power supply system capable of suppressing fluctuation in sneak current flowing from the plurality of servo devices into another system and downsizing the servo device.

### SOLUTION TO PROBLEM

In order to achieve the above object, the present invention is a design assistance device for assisting design of a DC power supply system including:
a first system including a plurality of servo devices each including an inverter circuit and an electric motor;
a power supply path configured to supply DC power from a DC power supply to the plurality of servo devices;
a second system connected to the power supply path in parallel with the first system, the DC power from the DC power supply being supplied to the second system; and
an inductor connected to the power supply path, and includes:
   an acquisition unit configured to acquire configuration information including connection configuration information regarding a connection configuration between the power supply path and the plurality of servo devices, information regarding the number of axes of each of the plurality of servo devices, wiring information regarding a wiring connecting the DC power supply, the plurality of servo devices, and the second system, and characteristic information regarding characteristics of the plurality of servo devices, and
   an output unit configured to output an inductance value of the inductor, based on the configuration information, the inductance value being capable of suppressing a fluctuation in a current flowing through the second system.

According to the above, since the inductance value of the inductor, which is an inductance value capable of suppressing the fluctuation in the current flowing through the second system, can be output based on the configuration information of the DC power supply system, it is possible to design the DC power supply system in which the inductor having an appropriate inductance value is provided in the DC power supply path for distributing the DC power from the DC power supply to the first system and the second system. Therefore, it is not necessary to provide each of the plurality of servo devices connected to the DC power supply with a filter device or the like for suppressing the fluctuation in sneak current flowing from the first system into the second system, thus enabling downsizing of each servo device.

In addition, in the present invention,
the second system may be configured by connecting a plurality of subsystems to the power supply path in parallel, each of the plurality of subsystems including a plurality of servo devices each including an inverter circuit and an electric motor.

In addition, in the present invention,
the output unit may output the inductance value using a circuit model of the DC power supply system.

By using such a circuit model, an appropriate inductance value can be output by simple processing.

In addition, in the present invention,
the output unit may output the inductance value using a current source model obtained by modeling the inverter circuit included in each of the plurality of servo devices of the first system.

By using such a current source model, an appropriate inductance value can be output by simple processing.

In addition, in the present invention,
the current source model may output a current represented by a sine wave having a frequency determined based on the characteristic information.

In addition, in the present invention,
a table in which the characteristic information and the frequency are associated with each other may be provided.

The current source model may output a current represented by a rectangular wave whose fundamental wave has the same frequency as a frequency determined based on the characteristic information.

The current source model may output a current represented by a waveform of a ripple current generated in the inverter circuit.

In addition, in the present invention,
an input of information regarding an operation pattern of the current source model may be received, and
the output unit may output the inductance value using the current source model that operates in accordance with the operation pattern that is input.

In addition, in the present invention,
the current source model may be a transient analysis model including an inverter circuit model configured by a semiconductor element, a motor circuit model, and an inverter control circuit model.

In addition, in the present invention,
the wiring information may include a type and a length of the wiring.

In addition, in the present invention,
an input of information regarding a plurality of the inductors having different characteristics may be received, and
the output unit may output a recommended inductor among the plurality of inductors having the different characteristics.

In this way, even when there are a plurality of inductor candidates that the user wants to use for design of the DC power supply system, appropriate assistance can be provided.

In the present invention,
an optimization unit configured to optimize the inductance value output by the output unit may be provided.

In this way, even when the inductance value capable of suppressing the current flowing through the second system cannot be limited, an optimal inductance value can be output.

In addition, in the present invention,
the optimization unit may optimize the inductance value, based on an index for evaluating suppression of a fluctuation in a current flowing through the wiring connected to the second system.

In this way, even when the inductance value capable of suppressing the current flowing through the second system cannot be limited, an optimal inductance value reflecting the index for evaluating the suppression of the fluctuation in the current flowing through the wiring connected to the second system can be output.

In addition, the present invention is a design assistance method for assisting design of a DC power supply system including:
a first system including a plurality of servo devices each including an inverter circuit and an electric motor;
a power supply path configured to supply DC power from a DC power supply to the plurality of servo devices;
a second system connected to the power supply path in parallel with the first system, the DC power from the DC power supply being supplied to the second system; and
an inductor connected to the power supply path, and includes:
   acquiring configuration information including connection configuration information regarding a connection configuration between the power supply path and the plurality of servo devices, information regarding the number of axes of each of the plurality of servo devices, wiring information regarding a wiring connecting the DC power supply, the plurality of servo devices, and the second system, and characteristic information regarding characteristics of the plurality of servo devices, and
   outputting an inductance value of the inductor, based on the configuration information, the inductance value being capable of suppressing a fluctuation in a current flowing through the second system.

In addition, the present invention is a design assistance program for assisting design of a DC power supply system including:
a first system including a plurality of servo devices each including an inverter circuit and an electric motor;
a power supply path configured to supply DC power from a DC power supply to the plurality of servo devices;
a second system connected to the power supply path in parallel with the first system, the DC power from the DC power supply being supplied to the second system; and
an inductor connected to the power supply path, and causes a computer to execute:
   acquiring configuration information including connection configuration information regarding a connection configuration between the power supply path and the plurality of servo devices, wiring information regarding a wiring connecting the DC power supply, the plurality of servo devices, and the second system, and characteristic information regarding characteristics of the plurality of servo devices, and
   outputting an inductance value of the inductor, based on the configuration information, the inductance value being capable of suppressing a fluctuation in a current flowing through the second system.

### ADVANTAGEOUS EFFECTS OF INVENTION

According to the present invention, in a DC power supply system that supplies DC power from a DC power supply to a plurality of servo devices, each including an inverter circuit and an electric motor, and another system via a power supply path, it is possible to design a DC power supply system capable of suppressing a fluctuation in a sneak current flowing from the plurality of servo devices into another system and downsizing the servo device.

### BRIEF DESCRIPTION OF THE DRAWINGS

FIG. 1 is a block diagram of a design assistance device according to an example of the present invention.
FIG. 2 is a schematic configuration diagram of a DC power supply system in an example of the present invention.
FIG. 3 is a flowchart showing design assistance processing in an example of the present invention.
FIG. 4 is a diagram illustrating a UI example in an example of the present invention.
FIG. 5 is a diagram illustrating a circuit model in an example of the present invention.
FIG. 6 is a diagram illustrating a circuit model in an example of the present invention.
FIG. 7 is a graph illustrating ripple current in an example of the present invention.
FIG. 8 is a graph illustrating an output of a ripple current source in an example of the present invention.
FIGS. 9 A to 9 C are diagrams illustrating a ripple current source in an example of the present invention.
FIG. 10 is a graph illustrating a relationship between a passive L value and ripple suppression in an example of the present invention.

### DESCRIPTION OF EMBODIMENTS

### [Application Example]

Hereinafter, an application example of the present invention will be described with reference to the drawings.

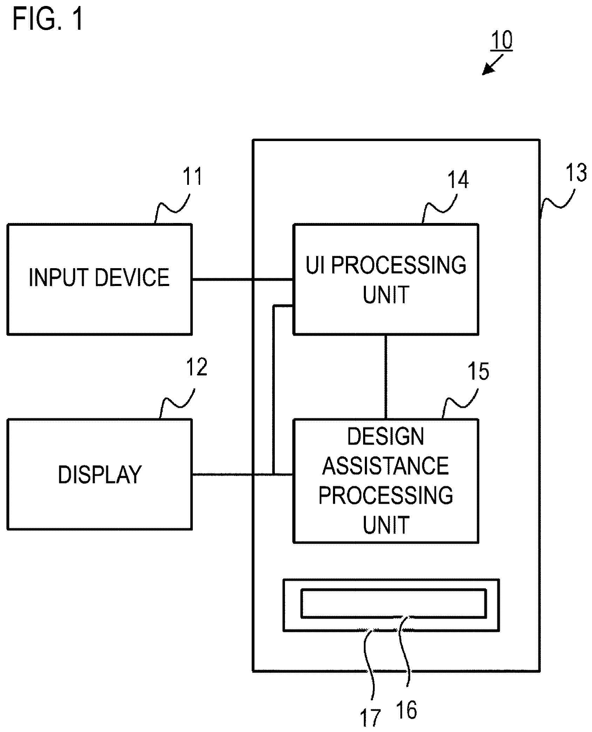

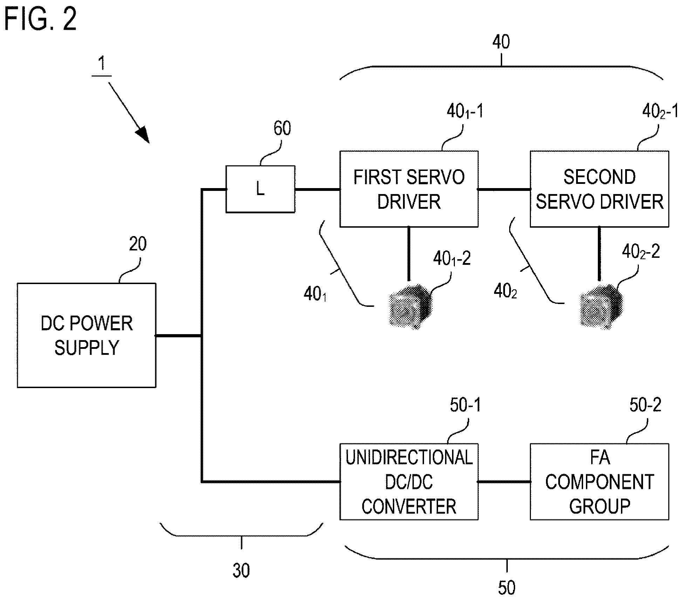

FIG. 1 illustrates a block diagram of a design assistance device 10 according to an example of the present invention. The design assistance device 10 is a device that assists design of a DC power supply system 1 (servo system) having a configuration as illustrated in FIG. 2, particularly, design of an inductance value (hereinafter, referred to as a passive L value) of an inductor 60.

In the DC power supply system 1, DC power is distributed and supplied from a DC power supply 20 to a first system 40 and a second system 50 via a DC power supply path 30. In the DC power supply system 1, an inductor 60 is connected in series to the DC power supply path 30.

The DC power supply system 1 includes a servo device 40₁ and a servo device 40₂, as the first system 40. The servo device 40₁ includes a first servo driver 40₁-1 and a first motor 40₁-2. The servo device 40₂ includes a second servo driver 40₂-1 and a second motor 40₂-2. In FIG. 2, the first system 40 is configured by two servo devices 40₁ and 40₂, but the number of servo devices configuring the first system 40 is not limited thereto, and the first system 40 may be configured by connecting a plurality of servo devices as appropriate.

The DC power supply system 1 further includes a second system 50. The second system 50 includes a unidirectional DC/DC converter 50-1 that converts a voltage of the DC power supplied from the DC power supply 20, and an FA component group 50-2 that is driven by the DC power supplied from the unidirectional DC/DC converter 50-1. In FIG. 2, the second system 50 is configured by the unidirectional DC/DC converter 50-1 and the FA component group 50-2, but the configuration of the second system 50 is not limited thereto, and the second system 50 may be configured by connecting a plurality of unidirectional DC/DC converters and FA component groups in parallel. In addition, as the second system 50, a plurality of subsystems, each of which is configured by connecting a plurality of servo devices, each including a servo driver and a motor, in an appropriate configuration, may be connected in parallel to the power supply path 30.

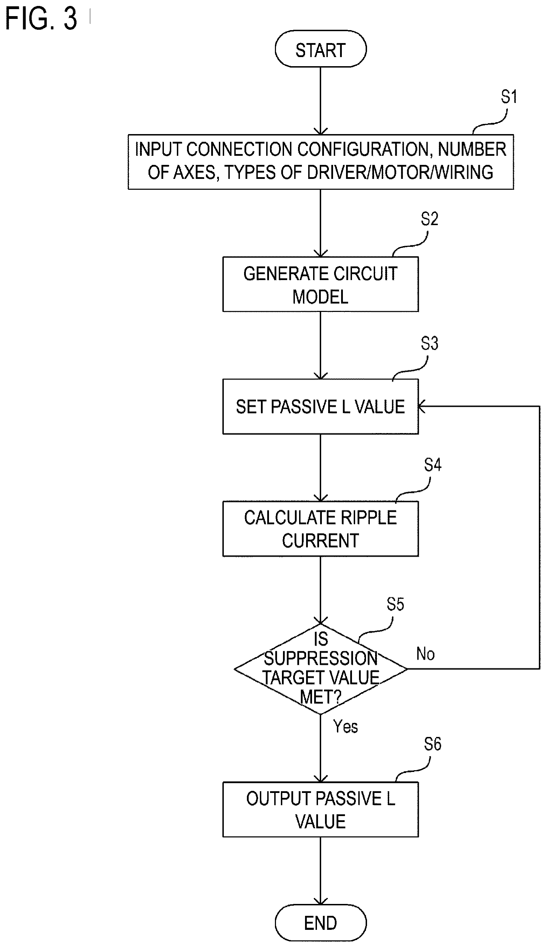

Design assistance processing that is executed by a design assistance processing unit 15 will be described with reference to FIG. 3.

In step S1, the design assistance processing unit 15 acquires configuration information regarding each servo device 40x (1 ≤ X ≤ N). The configuration information includes a connection configuration, the number of axes, and types of servo driver, motor, and wiring of a design target system.

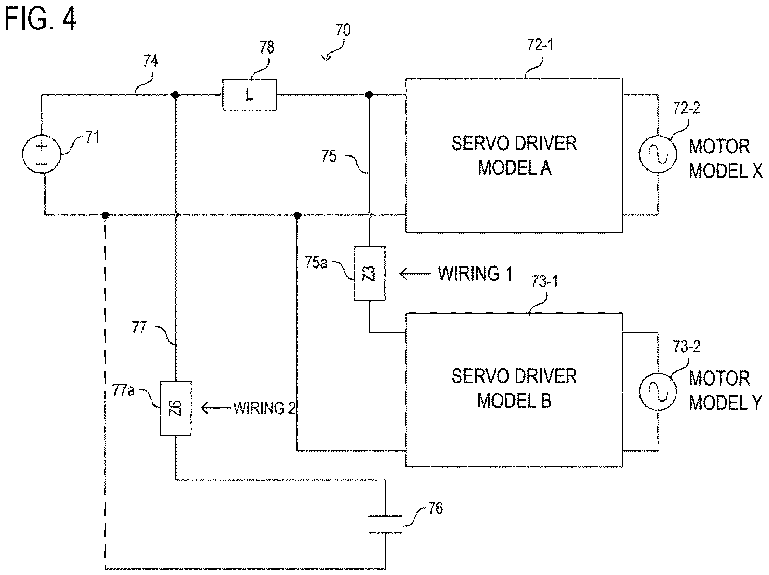

FIG. 4 illustrates an example of a UI 70 that is displayed on a display 12 for acquiring the configuration information of the design target system. The user inputs information regarding a model of a servo driver 72-1, information regarding a model of a motor 72-2, information regarding a model of a servo driver 73-1, information regarding a model of a motor 73-2, an impedance (inductance and resistance) of a wiring 75 connecting the servo driver 72-1 and the servo driver 73-1, and an impedance (inductance and resistance) of a wiring 77 connecting a DC power supply path 74 to a second system (capacitor 76) using the UI 70.

In step S2, the design assistance processing unit 15 generates a circuit model 80 based on the configuration information of the design target system acquired in step S1.

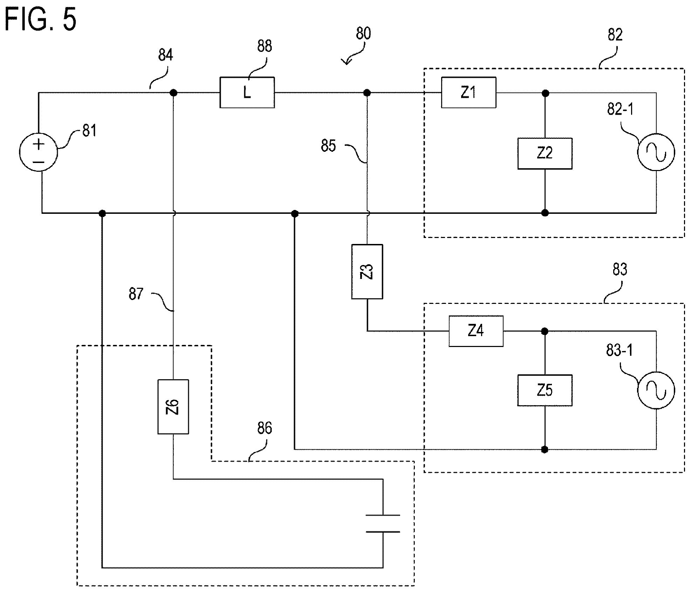

FIG. 5 illustrates the circuit model 80 generated by the design assistance processing unit 15.

The DC power is supplied from the DC power supply 81 to a servo driver 1-motor 1 circuit 82 via a DC power supply path 84. A servo driver 2-motor 2 circuit 83 is daisy-chained to the servo driver 1-motor 1 circuit 82 by a wiring 85. The second system 86 is connected to a DC power supply path 83 by a wiring 87. In addition, in the circuit model 80, an inductor model 88 to be designed is connected in series between a connection point of the wiring 87 to the DC power supply path 84 and the servo driver 1-motor 1 circuit 82.

In step S3, the design assistance processing unit 15 sets a passive L value. That is, an inductance of the inductor model 88 is set.

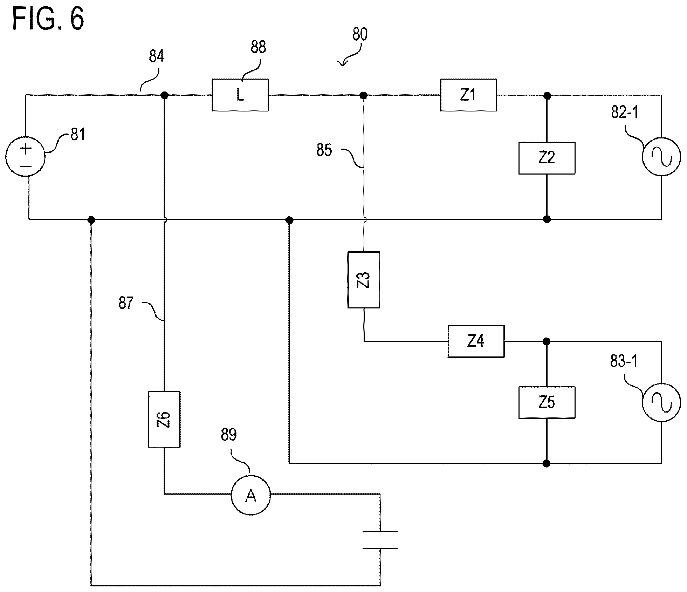

In step S4, a ripple current is calculated based on the passive L value set in step S3. Specifically, ripple current sources having various characteristics are set as the servo driver model 81-1 and the servo driver model 82-1 of the circuit model 80 illustrated in FIG. 5, and in the circuit model 80 having such ripple current sources, as illustrated in FIG. 6, a current value of the wiring 87 at a portion denoted by an ammeter 89 is calculated.

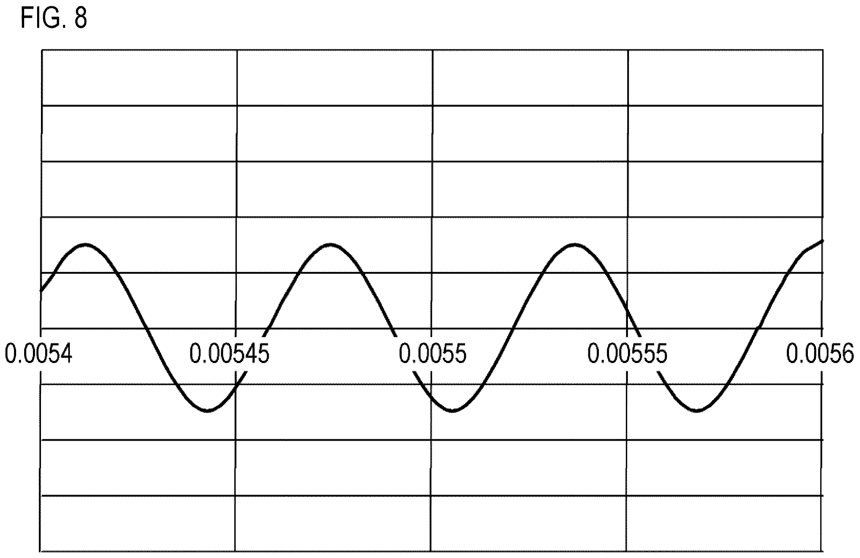

As the servo driver model 81-1 and the servo driver model 82-1, ripple current sources having various characteristics can be set. For example, as illustrated in FIG. 8, a current source whose current changes in accordance with a sine wave of a single frequency determined by a frequency and an effective value of ripple current may be set as the ripple current source. In this case, the single frequency may be a maximum frequency among harmonic components of the ripple current.

In step S5, the design assistance processing unit 15 calculates a sneak ripple current flowing into the second system 86, and determines whether the calculated ripple current clears a suppression target value in step S5.

When the passive L value clears the suppression target value, the design assistance processing unit 15 displays (outputs) the passive L value on the display 12.

When the set passive L value does not clear the suppression target value, the process returns to step S3. Then, the processing from step S3 to step S5 and subsequent steps, in which the passive L value is reset, the ripple current is calculated, and it is determined whether the suppression target value is cleared, is repeated until the passive L value clears the suppression target value.

According to such design assistance processing, in the DC power supply system 1, it is possible to assist the design of the DC power supply system 1 by calculating an appropriate passive L value for suppressing the ripple current generated in the second system 50.

### [Example 1]

Hereinafter, embodiments of the present invention will be described in detail based on examples with sequential reference to the drawings (including the drawings once described in the above application examples). However, the specific configurations described in the examples are not intended to limit the scope of this invention unless otherwise specified.

### (Configuration of Design Assistance Device)

FIG. 1 illustrates a block diagram of a design assistance device 10 according to an example of the present invention. The design assistance device 10 is a device that assists design of a DC power supply system 1 (servo system) having a configuration as illustrated in FIG. 2. Note that, although FIG. 2 simply illustrates that the respective configurations of the DC power supply system 1 are connected by one cable (power cable), each cable actually has two lines. Input and output of current (power) between the respective configurations are realized by the two lines.

The design assistance device 10 is an arbitrary information processing device such as a PC (computer) or a server. The design assistance device 10 includes an input device 11 such as a keyboard and a mouse, a display 12, and a main body unit 13. The user can set (input) information regarding the configuration of the DC power supply system 1 and the like by operating the input device 11. In addition, the display 12 may be any display device such as a liquid crystal display or a projector as long as it can display an image.

The main body unit 13 is a unit including a central processing unit (CPU), a random access memory (RAM), a nonvolatile storage device (a hard disk drive, a solid state drive, or the like) 17, and the like. A design assistance program 16 is installed in the nonvolatile storage device 17 of the main body unit 13. The CPU reads the design assistance program 16 onto the RAM and executes the design assistance program 16, so that the main body unit 13 operates as a UI processing unit 14 and a design assistance processing unit 15.

### (Configuration of DC Power Supply System)

Before describing the functions of the UI processing unit 14 and the design assistance processing unit 15, the DC power supply system 1, which is a system to be designed using the design assistance device 10, will be described with reference to FIG. 2.

In the DC power supply system 1, DC power is distributed and supplied from the DC power supply 20 to the first system 40 and the second system 50 via the DC power supply path 30. In the DC power supply system 1, the inductor 60 is connected in series to the DC power supply path 30.

The configuration of the DC power supply 20 included in the DC power supply system 1 is not limited, but may be configured by, for example, an AC/DC converter that converts AC power supplied from a commercial power system into DC power and outputs the DC power.

In addition, the DC power supply system 1 includes the servo device 40₁ and the servo device 40₂, as the first system 40. Here, an example in which the first system 40 includes two servo devices 40₁ and 40₂ will be described, but the number of servo devices is not limited. The servo device 40₁ includes the first servo driver 40₁-1 and the first motor 40₁-2. The servo device 40₂ includes the second servo driver 40₂-1 and the second motor 40₂-2. The first servo driver 40₁-1 and the second servo driver 40₂-1 respectively control the first motor 40₁-2 and the second motor 40₂-2 by generating, from the input DC power, AC power having frequencies used by the first motor 40₁-2 and the second motor 40₂-2. The first motor 40₁-2 and the second motor 40₂-2 convert power into mechanical energy to drive the load machine, respectively. Here, the servo device 40₁ and the servo device 40₂ are daisy-chained, but the connection method of the servo devices is not limited thereto, and the servo devices may be tree-connected. The DC power supply system 1 corresponds to the DC power supply system of the present invention. The servo device 40₁ and the servo device 40₂ correspond to the inverter circuit of the present invention, and the first motor 40₁-2 and the second motor 40₂-2 correspond to the electric motor of the present invention.

The DC power supply system 1 further includes the second system 50. Although the configuration of the second system 50 is not limited, the second system 50 includes the unidirectional DC/DC converter 50-1 that converts a voltage of the DC power supplied from the DC power supply 20, and the FA component group 502 that is driven by the DC power supplied from the unidirectional DC/DC converter 50-1. The FA component group 502 includes various components constituting a control system of factory automation (FA) that automates a production process in a production site. In addition, as the second system 50, a plurality of subsystems, each of which is configured by connecting a plurality of servo devices, each including a servo driver and a motor, in an appropriate configuration, may be connected in parallel to the power supply path 30.

Based on the above, the function of the design assistance device 10 (the UI processing unit 14 and the design assistance processing unit 15) according to the present example will be described with reference to FIG. 1. Note that in the following description, the DC power supply system 1 to be designed is referred to as a design target system. In addition, the total number of servo devices 40x in the design target system is denoted by N (≥ 2).

The UI processing unit 14 is a unit that acquires configuration information and specification information in response to a user operation on the input device 11. At this time, the UI processing unit 14 displays various types of screen information on the screen of the display 12.

The configuration information acquired by the UI processing unit 14 from the user includes a connection configuration, the number of axes, a type of driver, a type of motor, and a type of wiring of the design target system. Here, the connection configuration is a connection configuration of the servo device 40x, and includes a daisy-chain connection, a tree connection, and the like. The number of axes is the number of axes of the servo driver. The type of wiring is a type (length) of wiring connecting the DC power supply 20, each servo device 40x, and the second system 50. Specifically, information regarding an inductance and a resistance of each wiring is acquired by inputting the type of wiring. The type of driver is a type of servo driver 40x-1, and includes a DC voltage, a single phase/three phase, and a rated capacity. Specifically, information regarding a switching frequency and an impedance of the servo driver is acquired by inputting the type of driver. In addition, the type of motor includes a DC voltage, a rated capacity, the number of electrodes, a rotational speed, a torque, and the like of the motor. Specifically, information regarding an SW ripple current effective value is acquired by inputting the type of motor and the type of driver. Here, the connection configuration of the design target system corresponds to the connection configuration information of the present invention, and the number of axes corresponds to the information regarding the number of axes of the present invention. In addition, the type of driver and the type of motor correspond to the characteristic information of the present invention, and the type of wiring corresponds to the wiring information of the present invention. In addition, the UI processing unit 14 corresponds to the acquisition unit of the present invention.

Note that the UI processing unit 14 may acquire the inductance and resistance, and the total capacitance of the wiring connected to the second system 50.

### (Design Assistance Processing)

Design assistance processing that is executed by the design assistance processing unit 15 will be described with reference to FIG. 3. FIG. 3 shows a flowchart of the design assistance method. In the present example, the design assistance processing is processing that assists design of an inductance value (hereinafter, referred to as a passive L value) of the inductor 60 in the DC power supply system 1.

In step S1, the design assistance processing unit 15 acquires configuration information regarding each servo device 40x (1 ≤ X ≤ N). The configuration information includes a connection configuration, the number of axes, and types of servo driver, motor, and wiring of a design target system. The configuration information may be acquired by a user input through a UI (to be described below), or configuration information stored in advance in the nonvolatile storage device 17 may be acquired.

FIG. 4 shows an example of a UI 70 that is generated by the UI processing unit 14, displayed on the display 12, and used to acquire configuration information of the design target system through a user input using the input device 11. Here, the design assistance processing unit 15 acquires that the number of axes is 2 (two) and the connection configuration is a daisy-chain connection by a separate UI or the like. In the design target system displayed on the UI 70, a DC power supply 71 is connected to a servo driver 72-1 and a motor 72-2, which are servo devices, by a DC power supply path 74. In addition, the design target system includes a servo driver 73-1 and a motor 73-2, which are servo devices, and the servo driver 72-1 and the servo driver 73-1 are daisy-chained by a wiring 75. Additionally, in the design target system, the second system is represented by a capacitor 76 and is connected to the DC power supply path 74 by a wiring 77.

The user can input information regarding a model of the servo driver 72-1 as a servo driver model A by designating a rectangle displayed on the display 12 and corresponding to the servo driver 72-1. In addition, the user can input information regarding a model of the motor 72-2 as a motor model X by designating an electrical symbol of an AC power supply displayed on the display 12 and corresponding to the motor 72-2. Similarly, the user can input information regarding a model of the servo driver 73-1 as a servo driver model B and information regarding a model of the motor 73-2 as a motor model Y. In addition, the wiring 75 connecting the servo driver 72-1 and the servo driver 73-1 is designated as a wiring 1, and an impedance (inductance and resistance) of the wiring 75 can be input as a type of wiring Z3 by designating an electrical symbol 75a of the impedance. In addition, the wiring 77 connecting the DC power supply path 74 to the second system (capacitor 76) is designated as a wiring 2, and an impedance (inductance and resistance) of the wiring 77 can be input as a type of wiring Z6 by designating an electrical symbol 77a of the impedance. A rectangular symbol denoted by L indicates an inductor 78 that is to be designed by the design assistance processing. As described below, the specification and inductance value of the inductor may be set by specifying the inductor 78.

Returning to the flowchart of FIG. 3, the description of the design assistance processing will be continued.

In step S2, the design assistance processing unit 15 generates a circuit model 80 based on the configuration information of the design target system acquired in step S1.

FIG. 5 illustrates the circuit model 80 generated by the design assistance processing unit 15.

The DC power is supplied from the DC power supply 81 to a servo driver 1-motor 1 circuit 82 via a DC power supply path 84. A servo driver 2-motor 2 circuit 83 is daisy-chained to the servo driver 1-motor 1 circuit 82 by a wiring 85. The second system 86 is connected to a DC power supply path 83 by a wiring 87. In addition, in the circuit model 80, an inductor model 88 to be designed is connected in series between a connection point of the wiring 87 to the DC power supply path 84 and the servo driver 1-motor 1 circuit 82. The circuit model 80 corresponds to the circuit model of the present invention.

The servo driver 1-motor 1 circuit 82 is a circuit obtained by modeling a servo driver generated based on information input by the user as the servo driver model A and the motor model X and a motor controlled by the servo driver. Similarly, the servo driver 2-motor 2 circuit 83 is a circuit obtained by modeling a servo driver generated based on information input by the user as the servo driver model B and the motor model Y and a motor controlled by the servo driver. In addition, the second system 86 is a circuit obtained by modeling the second system 50 in the design target system.

The servo driver 1-motor 1 circuit 82 includes a servo driver model 82-1, an impedance Z1, and an impedance Z2. The servo driver model 82-1 is a model of the first servo driver 40₁-1, the impedance Z1 equivalently represents the impedance of the servo device 40₁ as the impedance of the wiring connected in series to the DC power supply path 84, and the impedance Z2 equivalently represents the impedance of the servo device 40₁ as the impedance connected in parallel to the servo driver model 82-1.

Similarly, the servo driver 2-motor 2 circuit 83 includes a servo driver model 83-1, an impedance Z4, and an impedance Z5. The servo driver model 83-1 is a model of the second servo driver 40₂-1, the impedance Z3 equivalently expresses the impedance of the wiring 85 connecting the DC power supply path 84 and the servo device 40₂, the impedance Z4 equivalently expresses the impedance of the servo device 40₂ as the impedance connected in series to the wiring 85, and the impedance Z5 equivalently expresses the impedance of the servo device 40₂ as the impedance connected in parallel to the servo driver model 83-1.

The second system 86 includes an impedance Z6 that equivalently represents the impedance of the wiring 87 connected to the DC power supply path 84.

The description returns to the flowchart of FIG. 3.

In step S3, the design assistance processing unit 15 sets a passive L value. That is, an inductance of the inductor model 88 is set. Although any value can be set as the passive L value, the passive L value is set to 30 µH, for example, here.

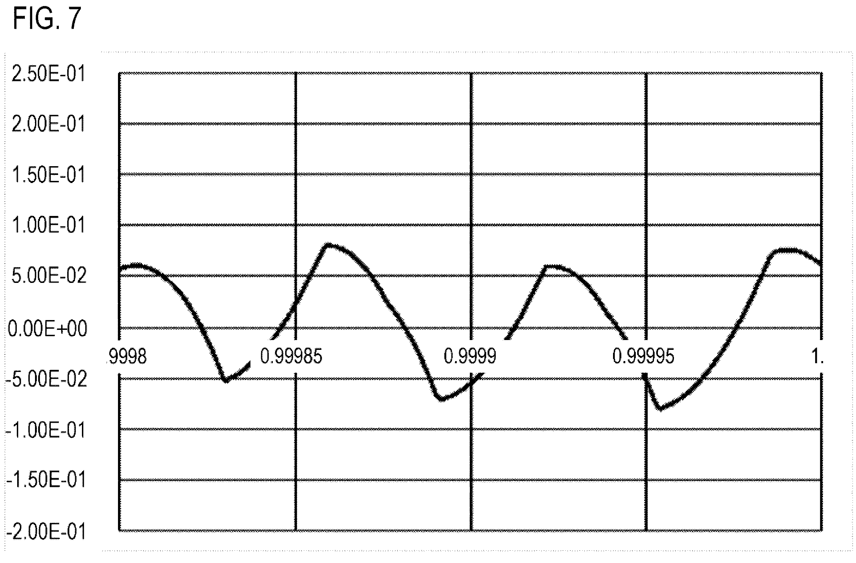

In step S4, a ripple current is calculated based on the passive L value set in step S3. Specifically, ripple current sources having various characteristics are set as the servo driver model 81-1 and the servo driver model 82-1 of the circuit model 80 illustrated in FIG. 5, and in the circuit model 80 having such ripple current sources, as illustrated in FIG. 6, a current value of the wiring 87 at a portion denoted by an ammeter 89 is calculated. FIG. 7 shows an example of the current value calculated in this manner, and the sneak current value flowing into the second system 50 fluctuates due to the fluctuation in the output from the ripple current source. Here, the ripple current source corresponds to the current source model of the present invention.

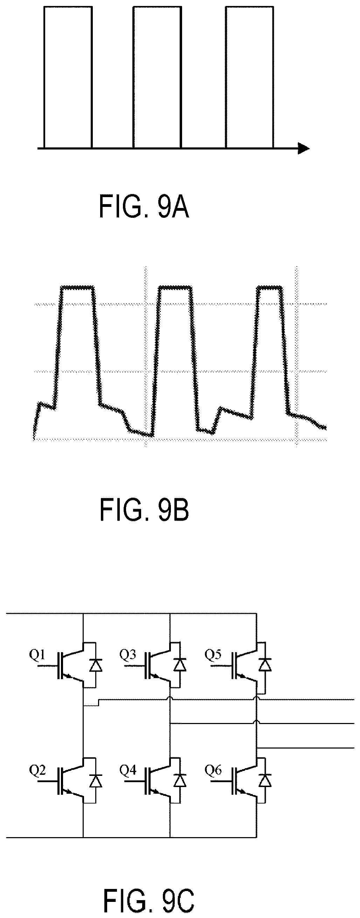

As the servo driver model 81-1 and the servo driver model 82-1, ripple current sources having various characteristics can be set. For example, an AC current source whose current changes in accordance with a sine wave of a frequency of a commercial power system may be set as the ripple current source. In addition, as shown in FIG. 8, a current source whose current changes in accordance with a sine wave of a single frequency determined by a frequency and an effective value of ripple current may be set as the ripple current source. In this case, the single frequency may be a maximum frequency among harmonic components of the ripple current. Since the frequency and the effective value of the ripple current are determined by the combination of the servo driver and the motor, the frequency and the effective value can be determined based on the characteristic information of the servo driver and the motor acquired as the configuration information in step S1. Further, a table in which the characteristic information of the servo driver and the motor, and the frequency and the effective value of the ripple current source are associated with each other may be stored in a predetermined area of the nonvolatile storage device 17, and the frequency and the effective value of the ripple current source may be derived based on the table. Further, as shown in FIG. 9 A, a current source that outputs a rectangular wave whose fundamental wave has the same frequency as a frequency determined based on the characteristic information of the servo driver and the motor may be set as the ripple current source. In addition, as shown in FIG. 9 B, a current source that outputs a time waveform of ripple current may be set as the ripple current source. Further, a transient analysis model of an inverter included in the servo driver as shown in FIG. 9 C may be set as the ripple current source. Here, the transient analysis model is a transient analysis model including, for example, an inverter circuit model configured by a semiconductor element, a motor circuit model, and an inverter control circuit model. Further, a model that operates in accordance with an operation pattern input by a user may be set as the ripple current source.

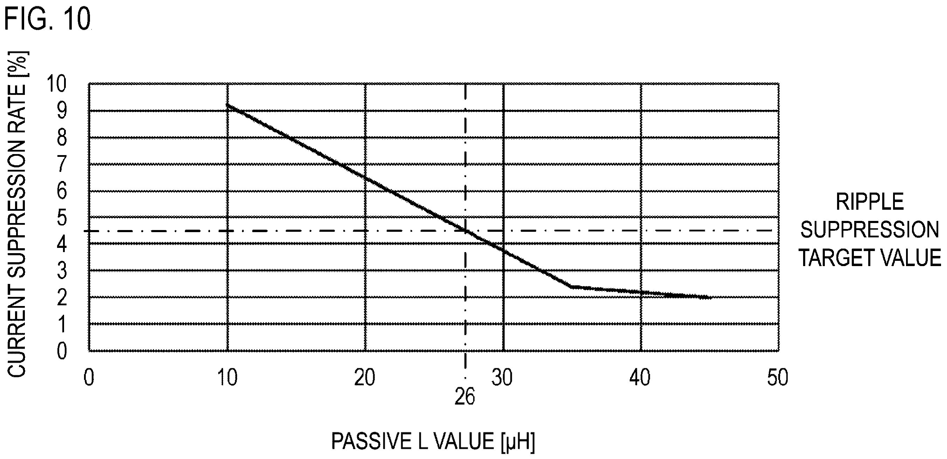

In step S5, as described above, the design assistance processing unit 15 sets a ripple current source, calculates a sneak ripple current flowing into another system, and determines whether the calculated ripple current clears a suppression target value in step S5. FIG. 10 shows a graph in which the horizontal axis represents the passive L value (µH) and the vertical axis represents the current suppression rate (%), in which the broken line shows a change in the current suppression rate of the ripple current when the passive L value is changed, which is obtained by the simulation in the design assistance processing unit 15. In FIG. 10, the ripple suppression target value is indicated by a dash-dot line. Here, the current suppression rate of 4.5% is set as the ripple suppression target value.

For example, as described above, when the passive L value is set to 30 µH, as can be seen from FIG. 10, the current suppression rate at this time is equal to or less than 4.5%, which is the ripple suppression target value.

In this way, when the passive L value clears the suppression target value, the design assistance processing unit 15 displays (outputs) the passive L value on the display 12 in step S6. Here, the design assistance processing unit 15 corresponds to the output unit of the present invention.

On the other hand, when the set passive L value does not clear the suppression target value, the process returns to step S3. Then, the processing from step S3 to step S5 and subsequent steps, in which the passive L value is reset, the ripple current is calculated, and it is determined whether the suppression target value is cleared, is repeated until the passive L value clears the suppression target value.

According to such design assistance processing, in the DC power supply system 1, it is possible to assist the design of the DC power supply system 1 by calculating an appropriate passive L value for suppressing the ripple current generated in another system.

### (Modified Example)

In the design assistance processing shown in FIG. 3, when the passive L value set in step S3 clears the suppression target value, the passive L value is output. As illustrated in FIG. 10, in a case where the passive L value, which can clear the ripple suppression target value, is present over a certain range in the DC power supply system 1 having a specific configuration, processing of further optimizing the passive L value to be output may be executed. Specifically, when the ripple suppression target value is cleared in step S5 with respect to the passive L value appropriately set in step S3, the process does not immediately proceed to step S6 to output the passive L value, but returns to step S3 to reset the passive L value, and repeats the processing of steps S4 and S5. The passive L value is set by changing the passive L value by an appropriate value, and the smallest passive L value among a plurality of passive L values for clearing the ripple suppression target value is displayed (output) on the display 12 in step S6 as a recommended value. For example, in the DC power supply system 1 in which the passive L value changes as illustrated in FIG. 10, when 4.5% is set as the ripple suppression target value, the minimum passive L value of 26 µH among the passive L values that clear the ripple suppression target value is output as the recommended value. In this case, the design assistance processing unit 15 corresponds to the optimization unit of the present invention.

In addition, when setting the passive L value in step S3, the passive L value input by the user using the input device 11 may be set. When the passive L value input by the user clears the ripple suppression target value, the passive L value is displayed on the display 12, and thus it is possible to assist the user in determining whether the inductor to be used in the design of the DC power supply system 1 is appropriate. The user may be allowed to input a plurality of passive L values as candidates, and a passive L value that clears the ripple suppression target value may be displayed on the display 12 from the candidates, or a passive L value that is a recommended value may be displayed on the display 12 from the candidates. At this time, the user may directly input the passive L value, or may input appropriate information such as the product name, model, and specification of the inductor, and the design assistance processing unit 15 may convert the information into the corresponding passive L value and perform the processing. At this time, the design assistance processing unit 15 does not output the passive L value that clears the suppression target value, but outputs the product name or the like of the inductor corresponding to the passive L value as a recommended inductor. In addition, the UI processing unit 14 may include a UI that displays options such as the passive L value, and the product name, model, and specification of the inductor for the user to select.

In addition, the ripple suppression target value may be set by the user using the input device 11.

Note that, in order to enable the comparison between the constituent features of the present invention and the configurations of the example, the constituent features of the present invention will be described below with reference signs in the drawings.

### <Supplementary Note 1>

A design assistance device (10) for assisting design of a DC power supply system (1) including:
a first system (40) including a plurality of servo devices (40₁, 40₂) each including an inverter circuit (40₁-1, 40₂-1) and an electric motor (40₁-2, 40₂-2);
a power supply path (30) configured to supply DC power from a DC power supply (20) to the plurality of servo devices;
a second system (50) connected to the power supply path (30) in parallel with the first system (40), the DC power from the DC power supply (20) being supplied to the second system (50); and
an inductor (60) connected to the power supply path (30), the design assistance device (10) including:
   an acquisition unit (14) configured to acquire configuration information including connection configuration information regarding a connection configuration between the power supply path (30) and the plurality of servo devices (40₁, 40₂), information regarding the number of axes of each of the plurality of servo devices (40₁, 40₂), wiring information regarding a wiring connecting the DC power supply (20), the plurality of servo devices (40₁, 40₂), and the second system, and characteristic information regarding characteristics of the plurality of servo devices (40₁, 40₂), and
   an output unit (15) configured to output an inductance value of the inductor (60), based on the configuration information, the inductance value being capable of suppressing a fluctuation in a current flowing through the second system (50).

### <Supplementary Note 2>

The design assistance device (10) according to Supplementary Note 1, in which the second system (50) is configured by connecting a plurality of subsystems to the power supply path in parallel, each of the plurality of subsystems including a plurality of servo devices each including an inverter circuit and an electric motor.

### <Supplementary Note 3>

The design assistance device (10) according to Supplementary Note 1 or 2, in which the output unit (15) outputs the inductance value using a circuit model (80) of the DC power supply system (1).

### <Supplementary Note 4>

The design assistance device (10) according to Supplementary Note 3, in which the output unit (15) outputs the inductance value using a current source model (82-1, 83-1) obtained by modeling the inverter circuit (40₁-1, 40₂-1) included in each of the plurality of servo devices (40₁, 40₂) of the first system.

### <Supplementary Note 5>

The design assistance device (10) according to Supplementary Note 4, in which the current source model (82-1, 83-1) outputs a current represented by a sine wave having a frequency determined based on the characteristic information.

### <Supplementary Note 6>

The design assistance device (10) according to Supplementary Note 5, including a table in which the characteristic information and the frequency are associated with each other.

### <Supplementary Note 7>

The design assistance device (10) according to Supplementary Note 4, in which the current source model (82-1, 83-1) outputs a current represented by a rectangular wave whose fundamental wave has the same frequency as a frequency determined based on the characteristic information.

### <Supplementary Note 8>

The design assistance device (10) according to Supplementary Note 4, in which the current source model (82-1, 83-1) outputs a current represented by a waveform of a ripple current generated in the inverter circuit (40₁-1, 40₂-1).

### <Supplementary Note 9>

The design assistance device (10) according to Supplementary Note 4, in which an input of information regarding an operation pattern of the current source model (82-1, 83-1) is received, and
the output unit (15) outputs the inductance value using the current source model (82-1, 83-1) that operates in accordance with the operation pattern that is input.

### <Supplementary Note 10>

The design assistance device (10) according to Supplementary Note 4, in which the current source model (82-1, 83-1) is a transient analysis model including an inverter circuit model configured by a semiconductor element, a motor circuit model, and an inverter control circuit model.

### <Supplementary Note 11>

The design assistance device (10) according to any one of Supplementary Notes 1 to 10, in which the wiring information includes a type and a length of the wiring.

### <Supplementary Note 12>

The design assistance device (10) according to any one of Supplementary Notes 1 to 11, in which an input of information regarding a plurality of the inductors (60) having different characteristics is received, and
the output unit (15) outputs a recommended inductor (60) among the plurality of inductors having the different characteristics.

### <Supplementary Note 13>

The design assistance device (10) according to any one of Supplementary Notes 1 to 12, including an optimization unit (15) configured to optimize the inductance value output by the output unit (15).

### <Supplementary Note 14>

The design assistance device (10) according to Supplementary Note 13, in which the optimization unit (15) optimizes the inductance value, based on an index for evaluating suppression of a fluctuation in a current flowing through the wiring connected to the second system (50).

### <Supplementary Note 15>

A design assistance method for assisting design of a DC power supply system (1) including:
a first system (40) including a plurality of servo devices (40₁, 40₂) each including an inverter circuit (40₁-1, 40₂-1) and an electric motor (40₁-2, 40₂-2);
a power supply path (30) configured to supply DC power from a DC power supply (20) to the plurality of servo devices (40₁, 40₂);
a second system (50) connected to the power supply path (30) in parallel with the first system (40), the DC power from the DC power supply (20) being supplied to the second system (50); and
an inductor (60) connected to the power supply path (30), the design assistance method including:
   acquiring configuration information including connection configuration information regarding a connection configuration between the power supply path and the plurality of servo devices, information regarding the number of axes of each of the plurality of servo devices, wiring information regarding a wiring connecting the DC power supply,
   the plurality of servo devices, and the second system, and characteristic information regarding characteristics of the plurality of servo devices, and
   outputting an inductance value of the inductor (60), based on the configuration information, the inductance value being capable of suppressing a fluctuation in a current flowing through the second system.

### <Supplementary Note 16>

A design assistance program (16) for assisting design of a DC power supply system (1) including:
a first system (40) including a plurality of servo devices (40₁, 40₂) each including an inverter circuit (40₁-1, 40₂-1) and an electric motor (40₁-2, 40₂-2);
a power supply path (30) configured to supply DC power from a DC power supply (20) to the plurality of servo devices (40₁, 40₂);
a second system (50) connected to the power supply path (30) in parallel with the first system (40), the DC power from the DC power supply (20) being supplied to the second system (50); and
an inductor (60) connected to the power supply path (30), the design assistance program (16) being configured to cause a computer to execute:
   acquiring configuration information including connection configuration information regarding a connection configuration between the power supply path and the plurality of servo devices, information regarding the number of axes of each of the plurality of servo devices, wiring information regarding a wiring connecting the DC power supply,
   the plurality of servo devices, and the second system, and characteristic information regarding characteristics of the plurality of servo devices, and
   outputting an inductance value of the inductor (60), based on the configuration information, the inductance value being capable of suppressing a fluctuation in a current flowing through the second system.

### REFERENCE SIGNS

1: DC power supply system
10: Design assistance device
14: UI processing unit
15: Design assistance processing unit
30: DC power supply path
40: First system
40₁-1: First servo driver
40₁-2: First motor
40₂-1: Second servo driver
40₂-2: Second motor
50: Second system
60: Inductor

## Claims

1. A design assistance device for assisting design of a DC power supply system including:
a first system including a plurality of servo devices each including an inverter circuit and an electric motor;
a power supply path configured to supply DC power from a DC power supply to the plurality of servo devices;
a second system connected to the power supply path in parallel with the first system, the DC power from the DC power supply being supplied to the second system; and
an inductor connected to the power supply path, the design assistance device comprising:
an acquisition unit configured to acquire configuration information including connection configuration information regarding a connection configuration between the power supply path and the plurality of servo devices, information regarding the number of axes of each of the plurality of servo devices, wiring information regarding a wiring connecting the DC power supply, the plurality of servo devices, and the second system, and characteristic information regarding characteristics of the plurality of servo devices, and
an output unit configured to output an inductance value of the inductor, based on the configuration information, the inductance value being capable of suppressing a fluctuation in a current flowing through the second system.

2. The design assistance device according to claim 1, wherein the second system is configured by connecting a plurality of subsystems to the power supply path in parallel, each of the plurality of subsystems including a plurality of servo devices each including an inverter circuit and an electric motor.

3. The design assistance device according to claim 1 or 2, wherein the output unit outputs the inductance value using a circuit model of the DC power supply system.

4. The design assistance device according to claim 3, wherein the output unit outputs the inductance value using a current source model obtained by modeling the inverter circuit included in each of the plurality of servo devices of the first system.

5. The design assistance device according to claim 4, wherein the current source model outputs a current represented by a sine wave having a frequency determined based on the characteristic information.

6. The design assistance device according to claim 5, comprising a table in which the characteristic information and the frequency are associated with each other.

7. The design assistance device according to claim 4, wherein the current source model outputs a current represented by a rectangular wave whose fundamental wave has the same frequency as a frequency determined based on the characteristic information.

8. The design assistance device according to claim 4, wherein the current source model outputs a current represented by a waveform of a ripple current generated in the inverter circuit.

9. The design assistance device according to claim 4, wherein an input of information regarding an operation pattern of the current source model is received, and the output unit outputs the inductance value using the current source model that operates in accordance with the operation pattern that is input.

10. The design assistance device according to claim 4, wherein the current source model is a transient analysis model including an inverter circuit model configured by a semiconductor element, a motor circuit model, and an inverter control circuit model.

11. The design assistance device according to claim 1 or 2, wherein the wiring information includes a type and a length of the wiring.

12. The design assistance device according to claim 1 or 2, wherein an input of information regarding a plurality of the inductors having different characteristics is received, and
the output unit outputs a recommended inductor among the plurality of inductors having the different characteristics.

13. The design assistance device according to claim 1 or 2, comprising an optimization unit configured to optimize the inductance value to be output by the output unit.

14. The design assistance device according to claim 13, wherein the optimization unit optimizes the inductance value, based on an index for evaluating suppression of a fluctuation in a current flowing through the wiring connected to the second system.

15. A design assistance method for assisting design of a DC power supply system including:
a first system including a plurality of servo devices each including an inverter circuit and an electric motor;
a power supply path configured to supply DC power from a DC power supply to the plurality of servo devices;
a second system connected to the power supply path in parallel with the first system, the DC power from the DC power supply being supplied to the second system; and
an inductor connected to the power supply path, the design assistance method comprising:
acquiring configuration information including connection configuration information regarding a connection configuration between the power supply path and the plurality of servo devices, information regarding the number of axes of each of the plurality of servo devices, wiring information regarding a wiring connecting the DC power supply, the plurality of servo devices, and the second system, and characteristic information regarding characteristics of the plurality of servo devices, and
outputting an inductance value of the inductor, based on the configuration information, the inductance value being capable of suppressing a fluctuation in a current flowing through the second system.

16. A design assistance program for assisting design of a DC power supply system including:
a first system including a plurality of servo devices each including an inverter circuit and an electric motor;
a power supply path configured to supply DC power from a DC power supply to the plurality of servo devices;
a second system connected to the power supply path in parallel with the first system, the DC power from the DC power supply being supplied to the second system; and
an inductor connected to the power supply path, the design assistance program being configured to cause a computer to execute:
acquiring configuration information including connection configuration information regarding a connection configuration between the power supply path and the plurality of servo devices, wiring information regarding a wiring connecting the DC power supply, the plurality of servo devices, and the second system, and characteristic information regarding characteristics of the plurality of servo devices, and
outputting an inductance value of the inductor, based on the configuration information, the inductance value being capable of suppressing a fluctuation in a current flowing through the second system.
